# FASCICULE DE BREVET EUROPEEN

(11) **EP 2 231 439 B1**
(45) Date de publication et mention de la délivrance du brevet: **27.06.2012**
(21) Numéro de dépôt: 08857605.3
(22) Date de dépôt: 27.11.2008
(51) Int. Cl.: B60N 3/10

(54) **PORTE-GOBELET COMPACT À FAÇADE ESCAMOTABLE**
Kompakter Tassenhalter mit verstaubarer Vorderseite
COMPACT STOWABLE-FRONT CUP HOLDER

(30) Priorité: 29.11.2007 FR 0759438
(43) Date de publication de la demande: 29.09.2010
(73) Titulaire: Faurecia Interieur Industrie, 92000 Nanterre (FR)
(72) Inventeur: ERCOLANO, Tony, F-60139 Wavignies (FR)
(74) Mandataire: Blot, Philippe Robert Emile
(86) Numéro de dépôt international: PCT/FR2008/052138
(87) Numéro de publication internationale: WO 2009/071846

(56) Documents cités:
- US-A- 4 981 277
- US-A- 5 628 486
- US-B1- 6 450 468

## Description

La présente invention concerne un porte-gobelet compact à façade escamotable. L'invention a notamment pour but de limiter l'encombrement en longueur d'un tel dispositif. L'invention trouve une application particulièrement avantageuse, mais non exclusive, avec les porte-gobelets destinés à être encastrés à l'intérieur d'une zone centrale d'un tableau de bord d'un véhicule automobile.

Par gobelet, on entend un récipient à boire de forme cylindrique ou légèrement évasé, généralement sans anse et sans pied. Toutefois, le porte-gobelet selon l'invention est apte à accueillir des récipients de toute forme munis ou non d'une anse ou d'un pied.

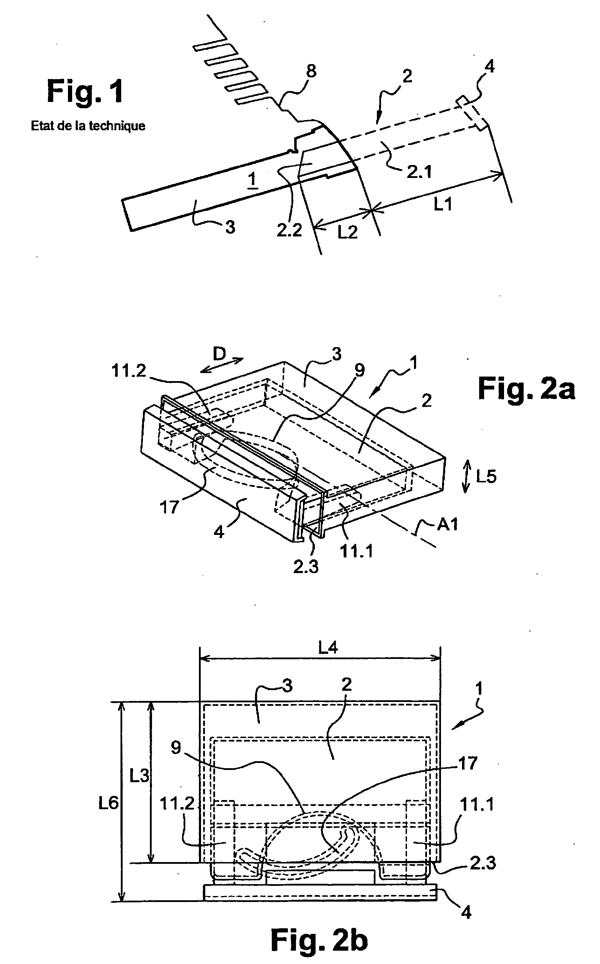

On connaît des porte-gobelets 1, comme représenté en coupe sur la figure 1, comportant un tiroir 2 apte à coulisser à l'intérieur d'un corps 3 de manière à passer indifféremment d'une position fermée dans laquelle le tiroir 2 est rentré à l'intérieur du corps à une position ouverte dans laquelle le tiroir 2 se trouve au moins en partie sorti du corps 3 pour recevoir un récipient. Par ailleurs, une façade 4 sensiblement plane faisant angle avec le plan d'extension du tiroir 2 assure la finition du porte-gobelet.

En position ouverte, le tiroir 2 présente une partie 2.1 de longueur L1 sortie du tiroir qui accueille le récipient et une partie 2.2 de longueur L2 engagée à l'intérieur du corps 3.

La partie sortie 2.1 doit être suffisamment longue pour accueillir des gobelets de toute taille. Elle présente généralement une longueur L1 d'environ 150mm. Tandis que la partie engagée 2.2 doit être suffisamment grande pour limiter le porte-à-faux entre la parties 2.1 et 2.2 et présente donc au minimum une longueur L2 d'environ 40mm. La longueur du corps 3 étant sensiblement égale à la somme des longueurs L1 et L2, elle vaut au minimum 190mm.

Or les véhicules actuels ne disposent pas d'un espace avec une longueur suffisante dans les zones centrales 8 des tableaux de bord pour accueillir des porte-gobelets de cette longueur. En effet, l'espace disponible dans la profondeur des zones centrales 8 est très limité en raison des nombreux éléments d'architecture, tels que les câbles électriques, qui traversent cette zone et empêchent l'implantation des porte-gobelets.

Le document US-4 981 277 décrit un porte-gobelet selon le préambule de la revendication 1. Le document US-5 628 486 décrit un porte-gobelet dans lequel la façade est escamotable, cette façade comportant des moyens pour se trouver dans une position inclinée en position ouverte de manière à soutenir la base du récipient, le porte-gobelet comprenant des anneaux de maintien rétractables par rotation.

L'invention se propose notamment de limiter la longueur du porte-gobelet afin de faciliter son implantation dans les zones centrales des tableaux de bord.

A cet effet, on crée une empreinte partielle du porte-gobelet (par exemple une demi-empreinte), de sorte que le tiroir présente localement un contour extérieur en forme d'arc de cercle ouvert destiné à être en contact avec une circonférence partielle du récipient.

En outre, la façade s'escamote, par exemple au moyen de bras articulés, de manière que lorsque le porte-gobelet est en position fermée la façade affleure un côté du tiroir, et lorsque le porte-gobelet est en position ouverte, la façade s'incline et sert de support au fond du gobelet.

Ainsi, avec un tiroir quasiment deux fois moins long que celui d'un porté-gobelet classique, le porte-gobelet selon l'invention permet d'accueillir des gobelets de même dimension que ceux accueillis par les porte-gobelets existants, et de réaliser un corps compact de dimensions réduites. En effet, un porte-gobelet selon l'invention présente une longueur de 130mm environ contre 190mm pour les porte-gobelets existants.

En outre, le porte-gobelet selon une caractéristique additionnelle de l'invention , comporte un bras de maintien rétractable articulé destiné à enserrer le gobelet. Ce bras de maintien, par exemple en forme de C, permet d'adapter le porte-gobelet aux différentes tailles de gobelets.

L'invention concerne donc un porte-gobelet destiné à recevoir un récipient du type gobelet, ce porte-gobelet comportant un tiroir et un corps creux,
- le tiroir étant apte à coulisser à l'intérieur du corps suivant une direction de déplacement de manière à passer indifféremment d'une position fermée dans laquelle le tiroir est rentré à l'intérieur du corps à une position ouverte dans laquelle le tiroir se trouve au moins en partie sorti du corps pour recevoir le récipient, et
- une façade reliée au tiroir, cette façade affleurant un côté du tiroir lorsque le tiroir est en position fermée,
caractérisé en ce que :
- le tiroir présente localement un contour extérieur en forme d'arc de cercle ouvert destiné à entrer en contact avec un périmètre partiel du récipient, et en ce que
- la façade est escamotable, cette façade comportant des moyens pour se trouver dans une position inclinée par rapport au tiroir lorsque ledit tiroir est en position ouverte de manière à soutenir la base du récipient.

Les caractéristiques complémentaires énumérées ci-après font l'objet des revendications dépendantes.

Selon une réalisation, la course de sortie du tiroir est inférieure au diamètre du plus petit gobelet pouvant être accueilli.

Selon une réalisation, le porte-gobelet comporte en outre un bras de maintien mobile en rotation par rapport au tiroir autour d'un axe perpendiculaire au plan dans lequel s'étend le tiroir pour adapter le porte-gobelet au diamètre du récipient à porter.

Selon une réalisation, le bras de maintien présente sensiblement une forme en C complémentaire du contour extérieur du récipient.

Selon une réalisation, la façade comporte au moins un bras de liaison reliant ladite façade au tiroir, ce bras de liaison étant mobile en rotation par rapport au tiroir autour d'un axe se trouvant dans le plan du tiroir et perpendiculaire à la direction de déplacement dudit tiroir.

Selon une réalisation, la façade comporte deux bras de liaison, ces deux bras de liaison présentant chacun une extrémité reliée à la façade et une extrémité reliée à un des côtés du tiroir s'étendant suivant la direction de déplacement.

Selon une réalisation, la façade présente une surface inclinée par rapport à la surface d'extension de ladite façade de manière que la base du récipient repose à plat sur la façade.

Selon une réalisation, l'angle d'inclinaison de la surface correspond à l'angle d'inclinaison du bras de liaison par rapport au tiroir lorsque ledit tiroir est en position ouverte.

Selon une réalisation, le contour du tiroir présente une forme de demi-cercle.

L'invention sera mieux comprise à la lecture de la description qui suit et à l'examen des figures qui l'accompagnent. Ces figures sont données qu'à titre illustratif mais nullement limitatif de l'invention. Elles montrent :
Figure 1 (déjà décrite) : une vue en coupe d'un porte-gobelet selon l'état de la technique en position ouverte ;
Figures 2a et 2b : une vue en trois dimensions et une vue de haut montrant les arêtes cachées d'un porte-gobelet selon l'invention en position fermée ;
Figures 3a et 3b : une vue en trois dimensions et une vue de haut montrant les arêtes cachées d'un porte-gobelet selon l'invention en position ouverte.

Les éléments identiques conservent la même référence d'une figure à l'autre.

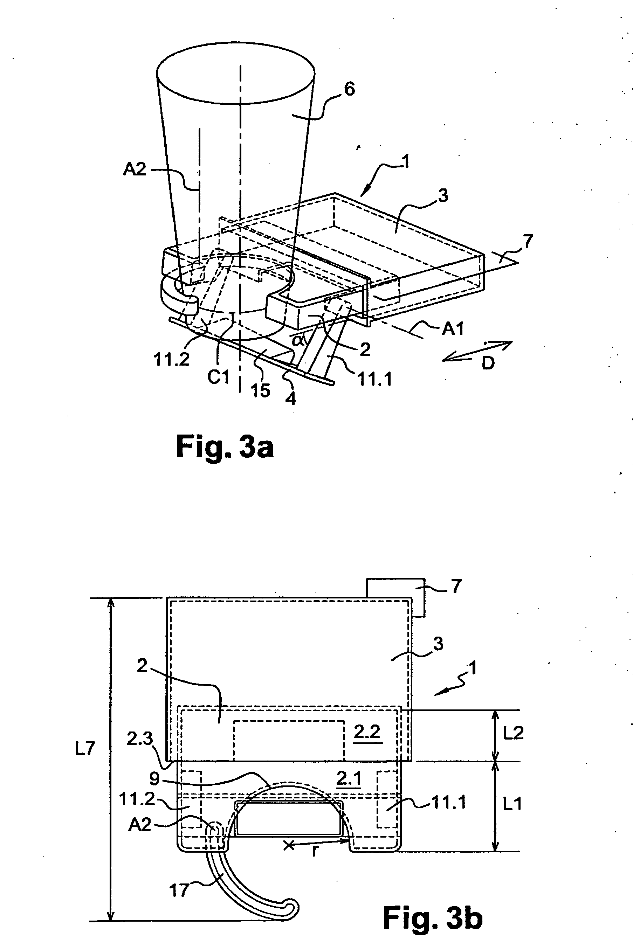

Les figures 2 et 3 montrent un porte-gobelet 1 selon l'invention comportant un tiroir 2 apte à coulisser suivant une direction D de coulissement à l'intérieur d'un corps 3 creux sensiblement parallélépipédique.

Ce tiroir 2 est apte à passer indifféremment d'une position fermée montrée sur les figures 2 à une position ouverte montrée sur les figures 3. Dans la position fermée, le tiroir 2 est rentré à l'intérieur du corps 3. Dans la position ouverte, le tiroir 2 présente une partie 2.1 sortie du corps 3 destinée à recevoir un récipient 6, et une partie engagée 2.2 dans le corps 3.

Conformément à l'invention, la façade 4 présente une surface 15 inclinée par rapport à la surface d'extension de ladite façade 4, l'angle d'inclinaison de la surface 15 correspondant à l'angle d'inclinaison des bras 11.1, 11.2 par rapport au tiroir 2 lorsque ledit tiroir 2 est en position ouverte. Cette surface 15 permet au fond du gobelet 6 de reposer à plat contre la façade 4.

De préférence la longueur L1 de la partie sortie 2.1 (correspondant à la course de sortie du tiroir 2) est inférieure au diamètre du gobelet 6 à accueillir, en particulier cette longueur L1 est inférieure au diamètre du plus petit gobelet 6 pouvant être accueilli. Dans un exemple, le plus petit gobelet à accueillir est une canette cylindrique qui présente un diamètre de 66mm environ.

Plus précisément, le tiroir 2, qui s'étend suivant un plan d'extension 7, présente localement un contour 9 extérieur en forme d'arc de cercle ouvert vers l'extérieur dans la direction de déplacement D. Ce contour 9 en arc de cercle ouvert est destiné à entrer en contact avec un périmètre C1 partiel du gobelet 6 à recevoir. Autrement dit, le contour 9 n'est pas destiné à faire le tour du gobelet 6 à porter mais à suivre uniquement une partie du contour extérieur C1 de ce gobelet 6. Dans un exemple, le contour 9 présente localement la forme d'un demi-cercle dont le rayon r est égal à celui des plus grands gobelets trouvés dans le commerce.

Le porte-gobelet 1 comporte en outre une façade 4 sensiblement plane qui s'étend suivant une direction perpendiculaire à D. Cette façade 4 est reliée au tiroir 2 de manière amovible par l'intermédiaire de deux bras 11.1, 11.2. A cet effet, ces bras de liaison 11.1, 11.2 présentent chacun une extrémité reliée à la façade 4 et une extrémité reliée à un des côtés 13.1, 13.2 du tiroir 2 s'étendant suivant la direction D. Ces deux bras de liaison 11.1, 11.2 sont mobiles en rotation par rapport au tiroir 2 autour d'un axe A1 passant par le plan 7 et sensiblement perpendiculaire à la direction D.

En outre, le porte-gobelet 1 comporte un bras de maintien 17 mobile en rotation par rapport au tiroir 2 autour d'un axe A2 perpendiculaire au plan du tiroir 2 qui s'adapte à la taille du gobelet 6.

Lorsque le porte-gobelet 1 est en position fermée, comme montré sur les figures 2, le tiroir 2 est rentré à l'intérieur du corps 3. La façade 4 affleure alors un côté 2.3 du tiroir 2, la façade 4 étant proche et en regard du côté 2.3, les bras 11.1, 11.2 s'étendant suivant la direction D. Le bras de maintien 13 est alors rétracté vers le tiroir 2.

Lorsque le porte-gobelet 1 est en position ouverte, comme représenté sur les figures 3, le tiroir 2 est en partie sorti du corps 3. Les bras 11.1, 11.2 forment alors avec le tiroir 2 un angle α compris par exemple entre 5 et 75°, α valant de préférence 60. Le bras de maintien 13 est alors écarté légèrement de la paroi 9 de manière à permettre le positionnement du gobelet entre la paroi 9 et le bras 13.

Un gobelet 6 présentant une circonférence C1 (représentée en pointillés) peut alors être posé sur la surface inclinée de la façade 4 et entre le bras de maintien 13 et la paroi 9 en forme d'arc de cercle, le bras de maintien 13 s'adaptant au diamètre du récipient 6 à accueillir de manière à enserrer ce gobelet 6.

Lorsque le tiroir 2 passe de la position fermée à la position ouverte, la façade 4 s'éloigne du tiroir 2 de manière à libérer l'ouverture en forme d'arc de cercle du tiroir 2, les bras 11 sortant du corps 3 et tournant autour de l'axe A1 de manière à positionner la façade 4 dans la position montrée figure 3a, le bras de maintien 17 tournant autour de l'axe A2 pour se dégager légèrement de la paroi 9 du tiroir 2.

Lorsque le tiroir 2 passe de la position ouverte à la position fermée, le corps 3 exerce un effort sur les bras de liaison 11.1, 11.2, de sorte que la façade 4 est rabattue vers une extrémité 2.3 du tiroir 2, les bras 11 tournant autour de l'axe A1 pour se mettre dans une position sensiblement horizontale et positionner la façade 4 en regard d'un côté du tiroir 2, le bras de maintien 17 tournant autour de l'axe A2 de manière à se positionner contre la paroi 9, le tiroir 2, et les bras 11 et 17 rentrant à l'intérieur du corps 3.

Le passage d'une position à une autre est effectué de préférence au moyen d'un système de type « push / push » permettant de bloquer le tiroir 2 l'intérieur du corps 3 ou de sortir le tiroir 2 du corps 3 en poussant la façade 4 vers le corps 3.

Les déplacements de la façade 4 et du bras de maintien 17 peuvent être facilités par l'utilisation de ressorts positionnés dans les articulations du porte-gobelet 1, ces ressorts ayant tendance au repos à pousser le bras 17 vers le tiroir 2 et à écarter les bras 11.1, 11.2 du tiroir 2.

Selon une réalisation, le porte-gobelet 1 comporte un corps 2 présentant une largeur L3 de 106mm environ, une longueur L4 de 154mm environ, et une épaisseur L5 de 34mm environ.

En outre, la distance L6 entre la façade 4 et une extrémité opposée du corps 3 vaut environ 125mm. La distance L7 entre l'extrémité du bras de maintien 17 et l'extrémité du corps 3 opposée vaut environ 208mm.

## Revendications

1. Porte-gobelet (1) destiné à recevoir un récipient (6) du type gobelet, ce porte-gobelet (1) comportant un tiroir (2) et un corps creux (3),
- le tiroir (2) étant apte à coulisser à l'intérieur du corps suivant une direction de déplacement (D) de manière à passer indifféremment d'une position fermée dans laquelle le tiroir (2) est rentré à l'intérieur du corps (3) à une position ouverte dans laquelle le tiroir (2) se trouve au moins en partie sorti du corps (3) pour recevoir le récipient (6), et
- une façade (4) reliée au tiroir (2), cette façade (2) affleurant un côté (2.3) du tiroir (2) lorsque le tiroir (2) est en position fermée,
- le tiroir (2) présentant localement un contour (9) extérieur en forme d'arc de cercle ouvert destiné à entrer en contact avec un périmètre (C1) partiel du récipient (6), **caractérisé en ce que**
- la façade (4) est escamotable, cette façade (4) comportant des moyens (11.1, 11.2) pour se trouver dans une position inclinée par rapport au tiroir (2) lorsque ledit tiroir (2) est en position ouverte de manière à soutenir la base du récipient (6).

2. Porte-gobelet selon la revendication 1, **caractérisé en ce que** la course de sortie (L1) du tiroir (2) est inférieure au diamètre du plus petit gobelet (6) pouvant être accueilli.

3. Porte-gobelet selon la revendication 1 ou 2, **caractérisé en ce qu'**il comporte en outre un bras de maintien (17) mobile en rotation par rapport au tiroir (2) autour d'un axe (A2) perpendiculaire au plan (7) dans lequel s'étend le tiroir (2) pour adapter le porte-gobelet au diamètre du récipient (6) à porter.

4. Porte-gobelet selon la revendication 3, **caractérisé en ce que** le bras de maintien (17) présente sensiblement une forme en C complémentaire du contour extérieur du récipient (6).

5. Porte-gobelet selon l'une des revendications 1 à 4, **caractérisé en ce que** la façade (4) comporte au moins un bras de liaison (11.1, 11.2) reliant ladite façade (4) au tiroir (2), ce bras de liaison (11.1, 11.2) étant mobile en rotation par rapport au tiroir (2) autour d'un axe (A1) se trouvant dans le plan (7) du tiroir et perpendiculaire à la direction (D) de déplacement dudit tiroir.

6. Porte-gobelet selon la revendication 5, **caractérisé en ce que** la façade (4) comporte deux bras de liaison (11.1, 11.2), ces deux bras de liaison présentant chacun une extrémité reliée à la façade (4) et une extrémité reliée à un des côtés (13.1, 13.2) du tiroir (2) s'étendant suivant la direction D.

7. Porte-gobelet selon l'une des revendications 1 à 6, **caractérisé en ce que** la façade (4) présente une surface (15) inclinée par rapport à la surface d'extension de ladite façade (4) de manière que la base du récipient (6) repose à plat sur la façade (4).

8. Porte-gobelet selon les revendications 5 et 7, **caractérisé en ce que** l'angle d'inclinaison (α) de la surface (15) correspond à l'angle d'inclinaison du bras de liaison (11.1, 11.2) par rapport au tiroir (2) lorsque ledit tiroir (2) est en position ouverte.

9. Porte-gobelet selon l'une des revendications 1 à 8, **caractérisé en ce que** le contour (9) du tiroir (2) présente une forme de demi-cercle.

## Claims

1. Cup holder (1) which is intended to receive a receptacle (6) of the cup type, this cup holder (1) comprising a drawer (2) and a hollow body (3),
- the drawer (2) being capable of sliding inside the body in a movement direction (D) in order to move from a closed position in which the drawer (2) is retracted inside the body (3) to an open position in which the drawer (2) is at least partially extended from the body (3) in order to receive the receptacle (6), and
- a front (4) which is connected to the drawer (2), this front (2) being flush with a side (2.3) of the drawer (2) when the drawer (2) is in a closed position,
- the drawer (2) locally has an outer contour (9) in the form of an open circular arc which is intended to come into contact with a partial perimeter (C1) of the receptacle (6), **characterised in that**:
- the front (4) is retractable, this front (4) comprising means (11.1, 11.2) for becoming located in an inclined position relative to the drawer (2) when the drawer (2) is in an open position in order to support the base of the receptacle (6).

2. Cup holder according to claim 1, **characterised in that** the extension travel (L1) of the drawer (2) is less than the diameter of the smallest cup (6) which can be received.

3. Cup holder according to claim 1 or claim 2, **characterised in that** it further comprises a retention arm (17) which can be rotatably moved relative to the drawer (2) about an axis (A2) perpendicular relative to the plane (7) in which the drawer (2) extends in order to adapt the cup holder to the diameter of the receptacle (6) to be carried.

4. Cup holder according to claim 3, **characterised in that** the retention arm (17) substantially has a C-shape which complements the outer contour of the receptacle (6).

5. Cup holder according to any one of claims 1 to 4, **characterised in that** the front (4) comprises at least one connection arm (11.1, 11.2) which connects the front (4) to the drawer (2), this connection arm (11.1, 11.2) being rotatably movable relative to the drawer (2) about an axis (A1) which is located in the plane (7) of the drawer and which is perpendicular relative to the movement direction (D) of the drawer.

6. Cup holder according to claim 5, **characterised in that** the front (4) comprises two connection arms (11.1, 11.2), these two connection arms each having an end which is connected to the front (4) and an end which is connected to one of the sides (13.1, 13.2) of the drawer (2) extending in the direction D.

7. Cup holder according to any one of claims 1 to 6, **characterised in that** the front (4) has a surface (15) which is inclined relative to the extension surface of the front (4) so that the base of the receptacle (6) rests in a flat state on the front (4).

8. Cup holder according to claim 5 and claim 7, **characterised in that** the inclination angle (α) of the surface (15) corresponds to the inclination angle of the connection arm (11.1, 11.2) relative to the drawer (2) when the drawer (2) is in the open position.

9. Cup holder according to any one of claims 1 to 8, **characterised in that** the contour (9) of the drawer (2) has a semi-circular shape.

## Patentansprüche

1. Getränkehalterung (1), die vorgesehen ist, um einen Behälter (6) des Trinkbechertyps aufzunehmen, wobei die Getränkehalterung (1) ein Schubfach (2) und einen hohlen Körper (3) aufweist,
- wobei das Schubfach (2) geeignet ist, entlang einer Verlagerungsrichtung (D) im Inneren des Körpers zu gleiten, um sich in gleicher Weise aus einer Schließposition, in der das Schubfach (2) in das Innere des Körpers (3) eingezogen ist, in eine Öffnungsposition zu bewegen, in der das Schubfach (2) zumindest teilweise aus dem Körper (3) herausgezogen ist, um den Behälter (6) aufzunehmen, und
- eine Vorderseite (4), die mit dem Schubfach (2) verbunden ist, wobei die Vorderseite (2) mit einer Seite (2.3) des Schubfachs (2) bündig ist, wenn sich das Schubfach (2) in der Schließposition befindet,
- wobei das Schubfach (2) lokal einen Außenumriss (9) in Form eines offenen Kreisbogens hat, der dazu bestimmt ist, mit einem Teilumfang (C1) des Behälters (6) in Kontakt zu gelangen, **dadurch gekennzeichnet, dass**
- die Vorderseite (4) einklappbar ist, wobei die Vorderseite (4) Mittel (11.1, 11.2) aufweist, um bezüglich des Schubfachs (2) in einer Neigungsposition zu sein, wenn sich das Schubfach (2) in der Öffnungsposition befindet, um die Basis des Behälters (6) zu unterstützen.

2. Getränkehalterung gemäß Anspruch 1, **dadurch gekennzeichnet, dass** der Ausziehhub (L1) des Schubfachs (2) kleiner als der Durchmesser des kleinsten Bechers (6) ist, der aufgenommen werden kann.

3. Getränkehalterung gemäß Anspruch 1 oder 2, **dadurch gekennzeichnet, dass** sie ferner einen Haltearm (17) aufweist, der bezüglich des Schubfachs (2) um eine Achse (A2) senkrecht zu der Ebene (7) bewegbar ist, in der sich das Schubfach (2) erstreckt, um die Getränkehalterung an den Durchmesser des zu haltenden Behälters (6) anzupassen.

4. Getränkehalterung gemäß Anspruch 3, **dadurch gekennzeichnet, dass** der Haltearm (17) im Wesentlichen eine C-Form hat, die zu dem Außenumriss des Behälters (6) komplementär ist.

5. Getränkehalterung gemäß einem der Ansprüche 1 bis 4, **dadurch gekennzeichnet, dass** die Vorderseite (4) mindestens einen Verbindungsarm (11.1, 11.2) aufweist, der die Vorderseite (4) mit dem Schubfach (2) verbindet, wobei der Verbindungsarm (11.1, 11.2) bezüglich des Schubfachs (2) um eine Achse (A1) bewegbar ist, die sich in der Ebene (7) des Schubfachs befindet und senkrecht zu der Verlagerungsrichtung (D) des Schubfachs ist.

6. Getränkehalterung gemäß Anspruch 5, **dadurch gekennzeichnet, dass** die Vorderseite (4) zwei Verbindungsarme (11.1, 11.2) aufweist, wobei die beiden Verbindungsarme jeweils aufweisen: ein Ende, das mit der Vorderseite (4) verbunden ist, und ein Ende, das mit einer der Seiten (13.1, 13.2) des Schubfachs (2) verbunden ist, die sich entlang der Richtung D erstrecken.

7. Getränkehalterung gemäß einem der Ansprüche 1 bis 6, **dadurch gekennzeichnet, dass** die Vorderseite (4) eine Fläche (15) aufweist, die bezüglich der Erstreckungsfläche der Vorderseite (4) geneigt ist, derart, dass die Basis des Behälters (6) flach auf der Vorderseite (4) liegt.

8. Getränkehalterung gemäß den Ansprüchen 5 und 7, **dadurch gekennzeichnet, dass** der Neigungswinkel (α) der Fläche (15) mit dem Neigungswinkel des Verbindungsarms (11.1, 11.2) bezüglich des Schubfachs (2) korrespondiert, wenn sich das Schubfach (2) in der Öffnungsposition befindet.

9. Getränkehalterung gemäß einem der Ansprüche 1 bis 8, **dadurch gekennzeichnet, dass** der Umriss (9) des Schubfachs (2) eine Halbkreisform hat.
